# EUROPÄISCHE PATENTSCHRIFT

(11) **EP 3 391 725 B1**
(45) Veröffentlichungstag und Bekanntmachung des Hinweises auf die Patenterteilung: **22.01.2020**
(21) Anmeldenummer: 18165896.4
(22) Anmeldetag: 05.04.2018
(51) Int. Cl.: A01D 41/12, B60P 1/40, B65G 33/14, B65G 33/32

(54) **SCHNECKENFÖRDERERZUSAMMENBAU FÜR EINEN MÄHDRESCHER**
ROTATING AUGER FOR A COMBINE HARVESTER
ENSEMBLE À CONVOYEUR À VIS POUR UNE MOISSONNEUSE-BATTEUSE

(30) Priorität: 19.04.2017 DE 102017003738
(43) Veröffentlichungstag der Anmeldung: 24.10.2018
(73) Patentinhaber: Deere & Company, Moline, IL 61265 (US)
(72) Erfinder: Loutz, Eric, 68163 Mannheim (DE); Kunkler, Kai-Martin, 68163 Mannheim (DE); Schewes, Karl, 68163 Mannheim (DE); Bastian, Bernd, 68163 Mannheim (DE); Albrecht, Jakob, 68163 Mannheim (DE)
(74) Vertreter: Holst, Sönke

(56) Entgegenhaltungen:
- EP-A1- 0 274 761
- AT-B- 365 401
- US-A- 4 037 745

## Beschreibung

Die Erfindung betrifft einen Schneckenfördererzusammenbau, der Folgendes umfasst:
einen ersten Schneckenförderer mit einem ersten Gehäuse und einer darin angeordneten, ersten Förderschnecke,
einen zweiten Schneckenförderer mit einem zweiten Gehäuse und einer darin angeordneten, zweiten Förderschnecke, und
einem Übergangsgehäuse, an das sich das erste Gehäuse und das zweite Gehäuse unter Bildung eines Übergangswinkels anschließen,
wobei die erste Förderschnecke stromauf der zweiten Förderschnecke angeordnet ist und im Übergangsgehäuse eine feststehende Kufe angebracht ist, welche angeordnet ist, das Fördergut von der ersten Förderschnecke zur zweiten Förderschnecke zu leiten, sowie einen damit ausgestatteten Mähdrescher.

### Stand der Technik

Landwirtschaftliche Mähdrescher werden bei der Ernte von Körnerfrüchten eingesetzt, um auf einem Feld angebaute Pflanzen zu ernten und zu dreschen. Das ausgedroschene Erntegut wird anschließend noch durch eine Trenneinrichtung bearbeitet. Das im Dresch- und Trennprozess gewonnene Korn wird in einer Reinigungseinrichtung gereinigt und in einem Korntank abgelegt, aus dem es schließlich auf ein Transportfahrzeug überladen wird.

Zum Entladen des Korntanks bedient man sich üblicherweise eines Schneckenförderers, der um die Hochachse zwischen einer ausgeschwenkten Entladeposition, in der er sich quer zur Vorwärtsrichtung erstreckt, und einer nach hinten eingeschwenkten Transportposition schwenkbeweglich ist. Um bei einer gegebenen Höhe des Korntankbodens das Abgabeende des Schneckenförderers möglichst hoch über dem Boden zu halten (und somit auch mit relativ hoch bauenden Transportfahrzeugen unter das Abgabeende des Schneckenförderers fahren zu können), umfassen gebräuchliche Schneckenförderer (s. EP 1 186 222 A1) einen ersten, sich näherungsweise vertikal nach oben erstreckenden Abschnitt, an welchen sich ein zweiter, horizontaler Abschnitt anschließt. Die beiden Abschnitte sind durch ein um etwa 90° abgewinkeltes Übergangsgehäuse untereinander verbunden, in welchen die Förderschnecken der beiden Abschnitte durch Antriebselemente (Gelenkwellen) untereinander trieblich gekoppelt werden.

Zwischen der ersten Förderschnecke und der zweiten Förderschnecke entsteht im Übergangsgehäuse ein gewisser räumlicher Abstand, der nicht durch aktiv angetriebene Förderelemente überstrichen wird. Weiterhin erfolgt eine Umlenkung des Erntegutflusses und zudem bei vielen Ausführungsformen eine Verengung des Querschnitts vom ersten zum zweiten Schneckenförderer hin. Diese Umstände können bei gewissen Erntegutbedingungen (z.B. bei relativ feuchtem Korn oder kleinen Kornabmessungen, die ein niedriges Verhältnis zwischen Volumen und somit Masse und Oberfläche bedingen, wie bei Grassamen, und sich daher nicht gut durch das Übergangsgehäuse werfen lassen) zu Übergabeproblemen und zu Verstopfungen führen.

Gebräuchliche Lösungen für dieses Problem (AT 365 401 B, GB 1 038 037 A, EP 0 274 761 A1 und US 4 093 087 A) sehen an einer Verbindungswelle zwischen den beiden Förderschnecken angebrachte Förderelemente in Form von Flügeln, Paddeln, o.ä. vor. Sie führen jedoch nicht in allen Fällen zu einem befriedigenden Förderverhalten und verhindern zudem, dass die Verbindungswelle mit ihren Gelenken abgedeckt werden kann. Das geförderte Korn kommt demnach auch in Kontakt mit dem Schmiermittel der Gelenke und kann durch die sich relativ zueinander bewegenden Elemente der Gelenke mechanisch beschädigt werden.

Die als gattungsbildend angesehene US 4 037 745 A zeigt einen Mähdrescher mit einem Entladeschneckenförderer, der sich aus einem vertikalen und einem horizontalen Teil zusammensetzt. In einem Übergangsgehäuse zwischen beiden Teilen ist ein gekrümmtes Ablenkblech angeordnet, um das Korn abzulenken. Das Ablenkblech erstreckt sich parallel zur Achse des horizontalen Teils des Schneckenförderers und ist in der dazu orthogonalen Ebene gekrümmt, d.h. bildet praktisch eine kurvenförmige Innenwand des Übergangsgehäuses.

Die EP 2 200 914 B1 zeigt einen Überkehrförderer, der sich aus einem horizontalen und einem ansteigenden Teil zusammensetzt. Die Wendel des horizontalen Schneckenförderers ist endseitig mit einem Bereich ausgestattet, der eine größere Steigung als die übrige Wendel aufweist.

### Aufgabe

Die Aufgabe der vorliegenden Erfindung wird darin gesehen, einen gegenüber dem Stand der Technik verbesserten Schneckenförderer und damit ausgestatteten Mähdrescher bereit zu stellen.

### Lösung

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Ein Schneckenfördererzusammenbau zum Transport von Fördergut in Form von granularem Material (wie beispielsweise Korn) umfasst einen ersten Schneckenförderer mit einem ersten Gehäuse und einer darin angeordneten, ersten Förderschnecke, einen zweiten Schneckenförderer mit einem zweiten Gehäuse und einer darin angeordneten, zweiten Förderschnecke, und ein Übergangsgehäuse, an das sich das erste Gehäuse und das zweite Gehäuse unter Bildung eines Übergangswinkels anschließen. Die erste Förderschnecke ist stromauf der zweiten Förderschnecke angeordnet, d.h. sie ist derart antreibbar, dass sie ihr Fördergut in das Übergangsgehäuse fördert, aus dem es von der zweiten Förderschnecke übernommen wird. Im Übergangsgehäuse ist eine feststehende Kufe angebracht, welche angeordnet ist, das Fördergut von der ersten Förderschnecke zur zweiten Förderschnecke zu leiten. Die Kufe umfasst eine bezüglich der Flussrichtung des Förderguts vordere Kante, die sich in einer orthogonal zur Drehachse der ersten Förderschnecke verlaufenden Ebene zumindest näherungsweise radial zur Drehachse der ersten Förderschnecke erstreckt.

Die Kufe ist demnach als passives Element im Übergangsgehäuse angeordnet und leitet das Fördergut von der ersten Förderschnecke zur zweiten Förderschnecke.

Zusätzlich kann an der dem Übergangsgehäuse unmittelbar benachbarten Wendel der ersten Förderschnecke ein zusätzliches Förderelement befestigt sein. Das Förderelement verbessert das Abgabeverhalten des ersten Schneckenförderers.

Gemäß einer bevorzugten Ausführungsform ist im Übergangsgehäuse eine (üblicherweise eine Gelenkwelle umfassende) Antriebsverbindung zur trieblichen Kopplung der ersten und zweiten Förderschnecke vorgesehen, welche durch eine Abdeckung gegenüber dem Innenraum des Übergangsgehäuses abgeschirmt werden kann.

Die Kufe kann sich von der vorlaufenden Kante aus wendelförmig, mit einer der ersten Förderschnecke entgegen gesetzten Steigung, zu einer rückwärtigen Kante erstrecken. Die Steigung der Kufe kann größer als die Steigung der ersten Förderschnecke sein. Die rückwärtige Kante der Kufe kann sich zumindest näherungsweise orthogonal zur benachbarten Innenwand des konkav gewölbten Übergangsgehäuses erstrecken. Die Kufe kann sich zwischen der Innenwand des Übergangsgehäuses und der Abdeckung erstrecken und/oder an der dem zweiten Schneckenförderer abgewandten Seite des Übergangsgehäuses angebracht sein.

Das zusätzliche Förderelement kann durch einen rampenartigen Wendelabschnitt gebildet werden, dessen Steigung größer als die Steigung der ersten Förderschnecke ist.

Der erfindungsgemäße Schneckenfördererzusammenbau kann an einem Mähdrescher zur Entleerung des Korntanks dienen. Es wäre auch denkbar, ihn zur Befüllung des Korntanks einzusetzen oder an einer beliebigen anderen Maschine, in der Korn oder anderes granulares Material gefördert wird, wie zur Entleerung eines Abtankwagens oder an einem beliebigen anderen Förderer für granulares Material insbesondere in Form von ganzem oder zerkleinerten Korn, wie er beispielsweise in mobilen oder stationären Anlagen zur Kornbearbeitung verwendet wird (z.B. Getreidemühlen oder -zerkleinerer oder Reinigungsanlagen für Getreide).

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers,
- Fig. 2: eine perspektivische seitliche Ansicht eines als Korntankentladeförderer vorgesehenen Schneckenfördererzusammenbaus, und
- Fig. 3: eine perspektivische Vorderansicht des Schneckenfördererzusammenbaus.

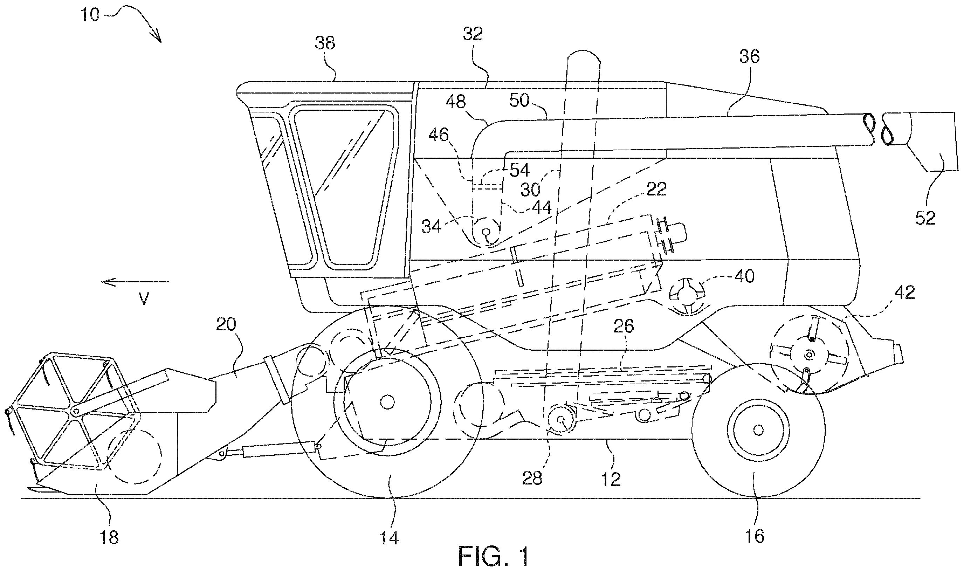

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb, die in der Figur 1 nach links verläuft.

An den vorderen Endbereich des Mähdreschers 10 ist ein Erntevorsatz 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 20 einem Axialdreschwerk 22 zuzuführen. Das im Axialdreschwerk 22 durch Dreschkörbe und Roste hindurchtretende, Körner und Verunreinigungen enthaltende Gemisch gelangt in eine Reinigungseinrichtung 26. Durch die Reinigungseinrichtung 26 gereinigtes Getreide wird mittels einer Körnerschnecke 28 einem Körnerelevator 30 zugeführt, der es in einen Korntank 32 befördert. Das gereinigte Getreide aus dem Korntank 32 kann durch ein Entladesystem mit einer Querschnecke 34 und einem als Schneckenfördererzusammenbau 36 ausgeführten Entladeförderer entladen werden. Die vom Axialdreschwerk 22 abgegebenen Erntegutreste werden mittels einer Fördertrommel 40 einem Strohhäcksler 42 zugeführt, der sie zerkleinert und über die Breite des Schneidwerks 18 über das Feld verteilt. Die genannten Systeme werden mittels eines Verbrennungsmotors angetrieben und von einem Bediener aus einer Fahrerkabine 38 heraus kontrolliert und gesteuert. Das dargestellte Axialdreschwerk 22 mit einem oder mehreren axialen Dresch- und Trennrotoren ist nur ein Ausführungsbeispiel und könnte beispielsweise durch ein Tangentialdreschwerk einer oder mehreren Dreschtrommeln und nachfolgendem Strohschüttler oder Trennrotor(en) ersetzt werden.

Der Schneckenfördererzusammenbau 36 umfasst einen sich von der Querförderschnecke 34 nach oben erstreckenden, unteren Teil 44, der starr am Fahrgestell 12 abgestützt ist. An einer Drehlagerung 54 (vgl. EP 1 186 222 A1) ist der obere Teil des Schneckenfördererzusammenbaus 36 um die Hochachse drehbar am unteren Teil 44 abgestützt. Der obere Teil des Schneckenfördererzusammenbaus 36 kann durch einen nicht gezeigten Aktor gegenüber der Drehlagerung 54 um die Hochachse verschwenkt werden, um den Schneckenfördererzusammenbau 36 von der in Figur 1 gezeigten Transportposition in eine Betriebsposition zu verschwenken, in der er sich vom Fahrgestell 12 quer zur Fahrtrichtung nach außen erstreckt, um ein Überladen von Korn aus dem Korntank 32 auf ein Transportfahrzeug zu ermöglichen.

Der obere Teil des Schneckenfördererzusammenbaus 36 umfasst einen sich zumindest näherungsweise vertikal nach oben erstreckenden, ersten Schneckenförderer 46, ein Übergangsgehäuse 48 und einen sich zumindest näherungsweise horizontal erstreckenden, zweiten Schneckenförderer 50, der bis sich zu einem äußeren Abgabeende 52 des Schneckenfördererzusammenbaus 36 erstreckt.

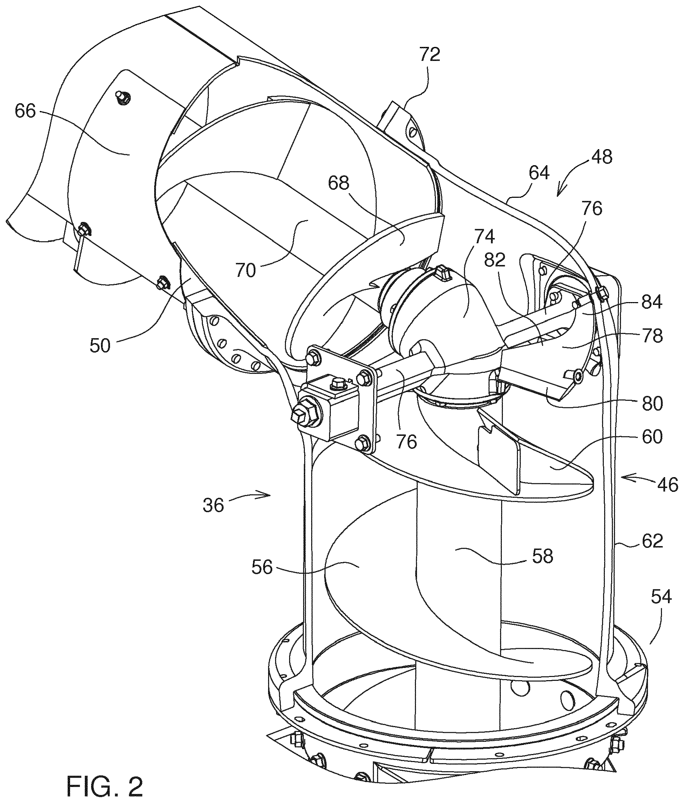

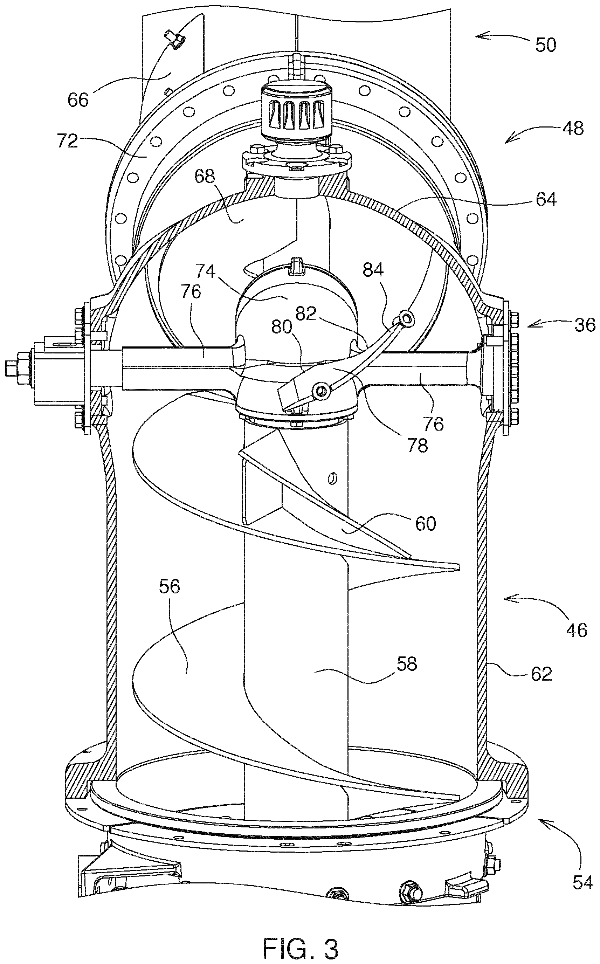

Die Figur 2 zeigt den ersten Schneckenförderer 46, das Übergangsgehäuse 48 und den proximalen (dem Mähdrescher 10 benachbarten) Teil des zweiten Schneckenförderers 50 von schräg vorn, und die Figur 3 zeigt sie von vorn.

Der erste Schneckenförderer 46 umfasst ein hohles, zylindrisches (erstes) Gehäuse 62, das an der Drehlagerung 54 befestigt ist. Im ersten Gehäuse 62 ist eine erste, wendelförmige Förderschnecke 56 um eine mittige Welle 58 gelegt. Die Welle 58 kann hohl oder massiv sein und wird von unten her, d.h. von einer mittigen Welle einer im unteren Teil 44 des Schneckenfördererzusammenbaus 36 angeordneten Förderschnecke (in Figur 1 nicht gezeigt) angetrieben, die mit der ersten Förderschnecke 56 einteilig oder damit gekoppelt sein kann. Die besagte Welle der im unteren Teil 44 des Schneckenfördererzusammenbaus 36 angeordneten Förderschnecke kann ihrerseits durch die Querförderschnecke 34 oder einen separaten Antrieb angetrieben werden, der je nach Bedarf an- und ausgeschaltet werden kann (vgl. EP 2 245 917 A2).

Um das Abgabeverhalten der ersten Förderschnecke 56 zu verbessern, ist an der dem Übergangsgehäuse 48 benachbarten Wendel, d.h. kurz vor dem oberen Ende der ersten Förderschnecke 56, ein zusätzliches Förderelement 60 angebracht. Das zusätzliche Förderelement 60 ist rampenartig ausgeführt und wird durch einen Wendelabschnitt gebildet, dessen Steigung größer als die Steigung der ersten Förderschnecke 56 ist.

Das Übergangsgehäuse 48 wird durch eine bogenförmig gekrümmte Wand 64 gebildet. Die Wand 64 kann, wie in den Figuren 2 und 3 gezeigt, mit dem ersten Gehäuse 62 einteilig geformt sein, z.B. als Guss- oder Schweiß- oder Pressteil, oder davon getrennt und durch eine Schweiß- oder Flanschverbindung damit gekoppelt werden. Der Durchmesser des zweiten Schneckenförderers 50 kann kleiner als jener des ersten Schneckenförderers 46 sein.

Der zweite Schneckenförderer 50 umfasst ein hohles, zylindrisches (zweites) Gehäuse 66, das über eine Flanschverbindung 72 mit der Wand 64 des Übergangsgehäuses 48 verbunden ist. Es wäre auch denkbar, das zweite Gehäuse 66 einteilig mit dem Übergangsgehäuse 48 auszuführen. Im zweiten Gehäuse 66 ist eine zweite, wendelförmige Förderschnecke 68 um eine mittige Welle 70 gelegt. Die Welle 70 kann hohl oder massiv sein und über eine im Übergangsgehäuse 48 angeordnete Antriebsverbindung, die durch eine Abdeckung 74 gegenüber dem Innenraum des Übergangsgehäuses 48 abgeschirmt wird (und daher in den Figuren 2 und 3 nicht zu sehen ist) von unten der Welle 58 her angetrieben. Die Antriebsverbindung kann in an sich bekannter Weise eine Gelenkwelle umfassen. Die Abdeckung 74 ist durch Bolzen 76, die sich radial zur ersten Welle 58 und zur zweiten Welle 70 erstrecken, an gegenüberliegenden Bereichen der Wand 64 des Übergangsgehäuses 48 festgelegt. Es wäre denkbar, anstelle des beschriebenen Antriebs der Welle 58 von der im unteren Teil 44 des Schneckenfördererzusammenbaus 36 angeordneten Förderschnecke her die Welle 58 oder die Welle 70 durch einen anderen Antrieb anzutreiben.

Um den insbesondere bei feuchtem oder feinkörnigem Fördermaterial gelegentlich problematischen Übergang vom ersten Schneckenförderer 46 zum zweiten Schneckenförderer 50 durch das nicht mit aktiv angetriebenen Förderelementen ausgestattete Übergangsgehäuse 48 zu verbessern, ist alternativ oder zusätzlich zum zusätzlichen Förderelement 60 eine Kufe 78 vorgesehen, die im Übergangsgehäuse 48 dem ersten Schneckenförderer 46 benachbart und vom zweiten Schneckenförderer 50 beabstandet angeordnet ist. Die Kufe 78 hat eine vorlaufende Kante 80, die in der orthogonal zur Drehachse der Welle 58 liegenden Ebene radial zur Drehachse der Welle 58 und etwa parallel zur Drehachse der Welle 70 angeordnet ist. Die Lage und Orientierung der vorlaufenden Kante 80 könnte von der gezeigten Position abweichen und beispielsweise in Umfangsrichtung betrachtet nach innen oder außen geneigt sein und/oder aus der horizontalen Ebene nach oben oder unten geneigt sein. Die Kufe 78 erstreckt sich von der Wand 64 bis zur Abdeckung 74. Von der vorlaufenden Kante 80 aus erstreckt sich die Kufe 78 wendelförmig zu einer nachlaufenden Kante 82, die etwa geradlinig und orthogonal zur benachbarten Wand 64 verläuft. Die Lage und Orientierung der nachlaufenden Kante 82 könnte von der gezeigten Position abweichen und beispielsweise in vertikaler Richtung betrachtet mehr oder weniger als zeichnerisch dargestellt nach innen oder außen geneigt sein und/oder in horizontaler Richtung mehr oder weniger weit nach oben oder unten geneigt sein. Am radial äußeren Ende der Kante 82 schließt sich der Wand 64 benachbart noch eine (optionale) nachlaufende Nase 84 an, die alternativ oder zusätzlich auch radial innen angebracht sein könnte. Die Kufe 78 bildet eine den Förderschnecken 56 und 68 entgegen gerichtete, relativ kurze Wendel, die eine größere Steigung als die Förderschnecken 56, 68 aufweist. An der vorderen Kante 80 ist die Kufe 78 noch geringfügig abgeknickt, sodass sie in einem vorlaufenden Bereich eine geringere Steigung als im übrigen Teil aufweist.

## Patentansprüche

1. Schneckenfördererzusammenbau (36), umfassend:
einen ersten Schneckenförderer (46) mit einem ersten Gehäuse (62) und einer darin angeordneten, ersten Förderschnecke (56),
einen zweiten Schneckenförderer (50) mit einem zweiten Gehäuse (66) und einer darin angeordneten, zweiten Förderschnecke (68), und
einem Übergangsgehäuse (48), an das sich das erste Gehäuse (62) und das zweite Gehäuse (66) unter Bildung eines Übergangswinkels anschließen,
wobei die erste Förderschnecke (56) stromauf der zweiten Förderschnecke (68) angeordnet ist und im Übergangsgehäuse (48) eine feststehende Kufe (78) angebracht ist, welche angeordnet ist, das Fördergut von der ersten Förderschnecke (56) zur zweiten Förderschnecke (68) zu leiten,
**dadurch gekennzeichnet, dass** die Kufe (78) eine bezüglich der Flussrichtung des Förderguts vordere Kante (80) umfasst, die sich in einer orthogonal zur Drehachse der ersten Förderschnecke (56) verlaufenden Ebene zumindest näherungsweise radial zur Drehachse der ersten Förderschnecke (56) erstreckt.

2. Schneckenfördererzusammenbau (36) nach Anspruch 1, wobei an der dem Übergangsgehäuse (48) unmittelbar benachbarten Wendel der ersten Förderschnecke (56) ein zusätzliches Förderelement (60) angebracht ist.

3. Schneckenfördererzusammenbau (36) nach Anspruch 1 oder 2, mit einer im Übergangsgehäuse (48) angeordneten Antriebsverbindung zur trieblichen Kopplung der ersten und zweiten Förderschnecke (56, 68) und einer die Antriebsverbindung gegenüber dem Innenraum des Übergangsgehäuses (48) abschirmenden Abdeckung (74).

4. Schneckenfördererzusammenbau (36) nach einem der Ansprüche 1 bis 3, wobei die Kufe (78) sich von einer vorlaufenden Kante (80) aus wendelförmig, mit einer der ersten Förderschnecke (56) entgegen gesetzten Steigung, zu einer rückwärtigen Kante (82) erstreckt.

5. Schneckenfördererzusammenbau (36) nach Anspruch 4, wobei die Steigung der Kufe (78) größer als die Steigung der ersten Förderschnecke (56) ist.

6. Schneckenfördererzusammenbau (36) nach einem der Ansprüche 4 oder 5, wobei die rückwärtige Kante (82) der Kufe (78) sich zumindest näherungsweise orthogonal zur benachbarten Innenwand des konkav gewölbten Übergangsgehäuses (48) erstreckt.

7. Schneckenfördererzusammenbau (36) nach einem der Ansprüche 1 bis 6, wenn rückbezogen auf Anspruch 3, wobei die Kufe (78) sich zwischen einer Wand (64) des Übergangsgehäuses (48) und der Abdeckung (74) erstreckt.

8. Schneckenfördererzusammenbau (36) nach einem der vorhergehenden Ansprüche, wobei die Kufe (78) an der dem zweiten Schneckenförderer (50) abgewandten Seite des Übergangsgehäuses (48) angebracht ist.

9. Schneckenfördererzusammenbau (36) nach einem der Ansprüche 2 bis 8, wobei das zusätzliche Förderelement (60) durch einen Wendelabschnitt gebildet wird, dessen Steigung größer als die Steigung der ersten Förderschnecke (56) ist.

10. Mähdrescher (10) mit einem Korntank (32) und einem zur Entleerung des Korntanks (32) angeordneten Schneckenfördererzusammenbau (36) nach einem der vorhergehenden Ansprüche.

## Claims

1. Screw conveyor assembly (36), comprising:
a first screw conveyor (46) having a first housing (62) and a first conveyor screw (56) arranged therein,
a second screw conveyor (50) having a second housing (66) and a second conveyor screw (68) arranged therein, and
a transition housing (48), to which the first housing (62) and the second housing (66) are connected, forming a transition angle,
wherein the first conveyor screw (56) is arranged upstream of the second conveyor screw (68) and a stationary runner (78) is fitted in the transition housing (48), which is arranged to conduct the conveyed material from the first conveyor screw (56) to the second conveyor screw (68),
**characterized in that** the runner (78) comprises a front edge (80) with respect to the flow direction of the conveyed material, which extends at least approximately radially relative to the axis of rotation of the first conveyor screw (56) in a plane extending orthogonally with respect to the axis of rotation of the first conveyor screw (56) .

2. Screw conveyor assembly (36) according to Claim 1, wherein an additional conveyor element (60) is attached to the helix of the first conveyor screw (56) that is immediately adjacent to the transition housing (48).

3. Screw conveyor assembly (36) according to Claim 1 or 2, having a drive connection arranged in the transition housing (48) for the drive coupling of the first and second conveyor screws (56, 68) and a covering (74) shielding the drive connection with respect to the interior of the transition housing (48).

4. Screw conveyor assembly (36) according to one of Claims 1 to 3, wherein the runner (78) extends helically from a leading edge (80) to a rear edge (82), with a pitch set counter to the first conveyor screw(56).

5. Screw conveyor assembly (36) according to Claim 4, wherein the pitch of the runner (78) is greater than the pitch of the first conveyor screw (56).

6. Screw conveyor assembly (36) according to either of Claims 4 and 5, wherein the rear edge (82) of the runner (78) extends at least approximately orthogonally with respect to the adjacent inner wall of the concavely curved transition housing (48) .

7. Screw conveyor assembly (36) according to one of Claims 1 to 6 if referring back to Claim 3, wherein the runner (78) extends between a wall (64) of the transition housing (48) and the covering (74).

8. Screw conveyor assembly (36) according to one of the preceding claims, wherein the runner (78) is attached to the side of the transition housing (48) that faces away from the second screw conveyor (50).

9. Screw conveyor assembly (36) according to one of Claims 2 to 8, wherein the additional conveyor element (60) is formed by a helical section, the pitch of which is greater than the pitch of the first conveyor section (56).

10. Combine harvester (10) having a grain tank (32) and a screw conveyor assembly (36) according to one of the preceding claims arranged to empty the grain tank (32).

## Revendications

1. Ensemble de transporteurs à vis sans fin (36) comprenant :
un premier transporteur à vis sans fin (46) comportant un premier boîtier (62) et une première vis sans fin (56) disposée dans celui-ci ;
un deuxième transporteur à vis sans fin (50) comportant un deuxième boîtier (66) et une deuxième vis sans fin (68) disposée dans celui-ci, et
un boîtier de transition (48) auquel le premier boîtier (62) et le deuxième boîtier (66) se raccordent en formant un angle de transition,
la première vis sans fin (56) étant disposée en amont de la deuxième vis sans fin (68) et une lame fixe (78) étant montée dans le boîtier de transition (48),
laquelle lame est disposée de manière à guider le produit transporté du premier transporteur à vis sans fin (56) au deuxième transporteur à vis sans fin (68),
**caractérisé en ce que** la lame (78) comprend un bord avant (80) par rapport au sens d'écoulement du produit transporté qui s'étend au moins à peu près radialement à l'axe de rotation de la première vis sans fin (56) dans un plan orthogonal à l'axe de rotation de la première vis sans fin (56).

2. Ensemble de transporteurs à vis sans fin (36) selon la revendication 1, un élément de transport supplémentaire (60) étant monté sur l'hélice, immédiatement adjacente au boîtier de transition (48), de la première vis sans fin (56).

3. Ensemble de transporteurs à vis sans fin (36) selon la revendication 1 ou 2, comprenant une liaison d'entraînement, disposée dans le boîtier de transition (48), et destinée à accoupler en entraînement les première et deuxième vis sans fin (56, 68), et un couvercle (74) protégeant la liaison d'entraînement par rapport à l'espace intérieur du boîtier de transition (48) .

4. Ensemble de transporteurs à vis sans fin (36) selon l'une des revendications 1 à 3, la lame (78) s'étendant en forme d'hélice, avec un pas opposé à celui de la première vis sans fin (56), depuis un bord avant (80) jusqu'à un bord arrière (82).

5. Ensemble de transporteurs à vis sans fin (36) selon la revendication 4, le pas de la lame (78) étant supérieur au pas de la première vis sans fin (56).

6. Ensemble de transporteurs à vis sans fin (36) selon l'une des revendications 4 ou 5, le bord arrière (82) de la lame (78) s'étendant au moins à peu près orthogonalement à la paroi intérieure adjacente du boîtier de transition (48) incurvé de manière concave.

7. Ensemble de transporteurs à vis sans fin (36) selon l'une des revendications 1 à 6 lorsqu'elle dépend de la revendication 3, la lame (78) s'étendant entre une paroi (64) du boîtier de transition (48) et le couvercle (74).

8. Ensemble de transporteurs à vis sans fin (36) selon l'une des revendications précédentes, la lame (78) étant montée du côté du boîtier de transition (48) qui est opposé au deuxième transporteur à vis sans fin (50) .

9. Ensemble de transporteurs à vis sans fin (36) selon l'une des revendications 2 à 8, l'élément de transport supplémentaire (60) étant formé par une partie d'hélice dont le pas est supérieur au pas du premier transporteur à vis sans fin (56).

10. Moissonneuse-batteuse (10) comprenant un réservoir de grains (32) et un ensemble de transporteurs à vis sans fin (36) selon l'une des revendications précédentes disposé de manière à vider le réservoir de grains (32).
